# EUROPÄISCHE PATENTSCHRIFT

(11) **EP 1 236 520 B1**
(45) Veröffentlichungstag und Bekanntmachung des Hinweises auf die Patenterteilung: **07.02.2007**
(21) Anmeldenummer: 02004051.5
(22) Anmeldetag: 23.02.2002
(51) Int. Cl.: B08B 3/02

(54) **Waschgerät zum Reinigen von Gegenständen wie Maschinenteilen oder dergleichen**
Device for washing objects such as machine parts or the like
Dispositif de lavage d'objets comme des pièces de machine ou similaires

(30) Priorität: 02.03.2001 DE 10110186
(43) Veröffentlichungstag der Anmeldung: 04.09.2002
(73) Patentinhaber: Sporer, Robert, 08606 Zaulsdorf (DE)
(72) Erfinder: Sporer, Robert, 08606 Zaulsdorf (DE)
(74) Vertreter: Flosdorff, Jürgen

(56) Entgegenhaltungen:
- EP-A- 0 838 668
- US-A- 6 095 163

## Beschreibung

Die Erfindung betrifft ein Gerät gemäss Anspruch 1.

Die Erfindung ist aber nicht nur auf solche Geräte anwendbar, bei denen die Waschflüssigkeit wieder in den Wasserbehälter zurückläuft, um bei einem nachfolgenden Reinigungsvorgang erneut verwendet zu werden, sondern auch auf solche Geräte, bei denen die Waschflüssigkeit nur einmal eingesetzt und dann abgeführt wird, wobei dies beispielsweise beim Reinigen von solchen Gegenständen der Fall ist, die das Gerät vollkommen sauber verlassen sollen.

Beim Waschvorgang können beispielsweise durch Verdunsten oder durch "Schöpfen" der Gegenstände beträchtliche Mengen Waschflüssigkeit aus dem Rezirkulationskreislauf entweichen. Wenn hierdurch der Wasserspiegel in dem Wasserbehälter unter ein vorgegebenes Mindestniveau sinkt, kann die Pumpe trockenlaufen und die Heizeinrichtung Schaden nehmen. Der Wasserstand in dem Wassertank kann aber beispielsweise auch dadurch unter ein vorgegebenes Mindestniveau sinken, daß der Filter oder das Lochblech zwischen dem eigentlichen Waschgerät und dem darunter befindlichen Wassertank zugesetzt ist.

Aus US-A-6,095,163 ist ein Gerät gemäß dem Oberbegriff des Patentanspruchs 1 bekannt, bei dem innerhalb des Wasserbehälters ein mit einem Schwimmer gekoppelter Permanentmagnet und ein auf den Permanentmagneten ansprechender Schalter angeordnet ist.

EP-A-0 838 668 offenbart eine Vorrichtung für die Niveaumessung in einem Behälter, die einen an der Außenwand des Behälters angeordneten Schalter und innerhalb des Behälters einen starren Schwenkarm aufweist, an dem ein Schwimmer und ein Permanentmagnet befestigt sind, wobei der letztere mit dem Schalter durch einen aus einem nicht-magnetischen Material bestehenden Wandbereich zusammenwirken kann.

Der vorliegenden Erfindung liegt die Aufgabe zugrunde, eine Sicherungseinrichtung anzugeben, die einfach auf einen Wasserstand einstellbar ist, bei der ein Schaltvorgang erfolgen soll, und die im Reparaturfalle nur einen geringen Arbeitsaufwand erfordert.

Diese Aufgabe wird erfindungsgemäß durch die Merkmale des Patentanspruchs 1 gelöst.

Vorteilhafte Ausgestaltungen der Erfindungen sind in den Unteransprüchen gekennzeichnet.

Die Erfindung sieht wenigstens eine Wasserstandserfassungseinrichtung vor, die an einer Wand des Wasserbehälters und/oder an einer Wand des Gehäuses des Waschgerätes oberhalb der Filtereinrichtung bzw. dem Lochblech angeordnet ist. Die Wasserstandserfassungseinrichtung enthält einen mit einem Schwimmer gekoppelten Permanentmagneten innerhalb des Wasserbehälters oder des Gehäuses des Gerätes und einen auf den Permanentmagneten ansprechenden Schalter, bei dem es sich vorzugsweise um einen Reedschalter handelt, der an der Außenwand des Wasserbehälters oder des Gehäuses des Gerätes angebracht ist. Der Wandbereich zwischen dem Permanentmagneten und dem Reedschalter besteht aus einem nicht-magnetischen Material wie z.B. Edelstahl. Wenn das Gehäuse aus einem magnetischen Material besteht, enthält es in dem Bereich zwischen dem Reedschalter und dem Permanentmagneten einen Einsatz aus einem nichtmagnetischen Material wie beispielsweise Messing oder Kunststoff.

Hierzu ist gemäß der Erfindung weiter vorgesehen, daß der Permanentmagnet an einem ersten starren Arm befestigt ist, der schwenkbar bevorzugt an einer an der Wand angebrachten Halterung gelagert ist und beim Schaltvorgang im wesentlichen vertikal nach oben weist. Dabei befindet sich der Permanentmagnet oberhalb des Wasserspiegels.

Der Schwimmer ist an einem weiteren starren Arm befestigt, der an einstellbarer Position an dem ersten starren Arm befestigt ist und bevorzugt etwa im rechten Winkel zu diesem verläuft. Das heißt, beim Schaltvorgang ist dieser zweite starre Arm bevorzugt etwa horizontal ausgerichtet.

Die Schwimmer/Permanentmagnetanordnung ist praktisch unverwüstlich, so daß als einziges Bauteil der Wasserstandserfassungseinrichtung der Reedschalter ausfallen kann. Da sich der Reedschalter an der Außenseite des Geräts bzw. des Wassertanks befindet, kann dieser schnell und einfach ausgetauscht werden, ohne daß hierzu der Wassertank entleert werden muß. Außerdem kann ein großer Reedschalter mit einem hohen Schaltstrom und damit einer sicheren Schaltleistung eingesetzt werden, da hierzu der erforderliche Platz zur Verfügung steht, so daß bei Erreichen eines vorgegebenen Wasserstands mit hoher Zuverlässigkeit der vorgesehene Schaltvorgang erfolgt. Dieser besteht vorzugsweise in dem Ausschalten der Pumpe und gegebenenfalls der Heizeinrichtung, wobei eine Wasserstandserfassungseinrichtung auch dazu vorgesehen sein kann, die Pumpe und gegebenenfalls die Heizeinrichtung einzuschalten.

Die innerhalb des Geräts bzw. Wassertanks befindliche Schwimmer/Permanentmagnetanordnung arbeitet auch bei heißem Waschwasser sicher und zuverlässig.

Der bevorzugt am Ende des zweiten Arms angebrachte Schwimmer hat in bevorzugter Ausgestaltung die Form eines hohlen Kugelabschnitts und besteht aus Metall oder Kunststoff. Der zweite Arm umgreift bevorzugt mittels eines Schubstücks den ersten starren Arm und ist in ausgewählter Lage mittels einer Stellschraube fixierbar.

Alternativ hierzu kann der Schwimmerarm auf der Lagerwelle gelenkig angebracht sein, während der Magnetarm in Längsrichtung des Schwimmerarms verschiebbar auf diesem sitzt.

Wenn der Wasserstand höher ist als der vorgegebene Minimalwert, wird der Permanentmagnet durch den Auftrieb des Schwimmers an die Wand des Wassertanks angedrückt, und zwar an die Stelle, an der an der Außenseite der Wand der Reedschalter angebracht ist. Sinkt der Wasserstand unter das vorgegebene Minimum, wird der Permanentmagnet von der Wand wegverschwenkt, wobei der Reedschalter bei einem Abstand des Permanentmagneten von der Wand von ca. 10 bis 20 mm den gewünschten Schaltvorgang ausführt, d.h. bevorzugt die Pumpe und die Heizeinrichtung abschaltet.

Wie oben erwähnt, kann eine derartige Sicherungseinrichtung auch im Bodenbereich des Geräts oberhalb der Filtersiebeinrichtung, die beispielsweise durch ein Filterlochblech gebildet sein kann, angeordnet sein, um bei Erfassung eines vorgegebenen Wasserstands, der Folge einer Verstopfung des Lochblechs ist, die Pumpe und gegebenenfalls die Heizeinrichtung abzuschalten.

Es wird betont, daß die erfindungsgemäße Wasserstandserfassungseinrichtung auch bei Geräten anderer Art einsetzbar ist, so daß es sich hierbei um eine von der beschriebenen Art des Geräts unabhängige Erfindung handelt.

Weitere Einzelheiten der Erfindung ergeben sich aus der nachfolgenden Beschreibung einer bevorzugten Ausführungsform der Erfindung sowie anhand der Zeichnungen. Dabei zeigen auf weitgehend schematische Weise:
- Figur 1: einen Längsschnitt durch ein Waschgerät und
- Figur 2: eine Seitenansicht der Wasserstandserfassungseinrichtung.

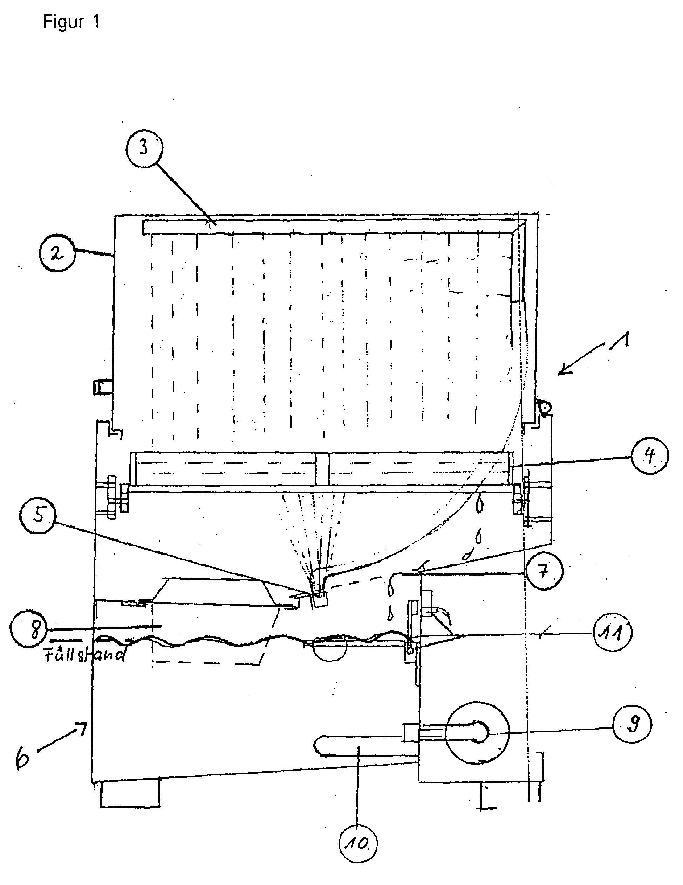

Figur 1 zeigt die wesentlichen Bestandteile eines Waschgerätes 1, das im oberen Bereich unter einem schwenkbaren Deckel 2 ein oberes Düsenrohr 3 hat, das die austretenden Wasserstrahlen auf einen Waschkorb 4 richtet, der zur Aufnahme der zu reinigenden Gegenstände dient. Der Waschkorb 4 liegt auf einem Drehkranz auf, der beim Betrieb des Gerätes zusammen mit dem Waschkorb 4 rotiert.

Unterhalb des Waschkorbs ist ein unteres Düsenrohr 5 angeordnet, das die austretenden Wasserstrahlen von unten auf die zu reinigenden Gegenstände richtet.

Das Waschgerät 1 enthält in seinem unteren Bereich einen Wassertank 6, in dem das verschmutzte Waschwasser durch ein Filterlochblech 7 zurückläuft. Neben dem unteren Ende des schräg angeordneten Filterlochblechs ist ein Filterkasten 8 angeordnet, in dem grobe Schmutzpartikel zurückbehalten werden.

Das in dem Wassertank 6 befindliche Wasser wird mittels einer Pumpe 9 den Düsenrohren 3 und 5 zugeführt, und zwar in einem mittels einer Heizung 10 erwärmten Zustand. Die Heizung 10 befindet sich im Bodenbereich des Wassertanks.

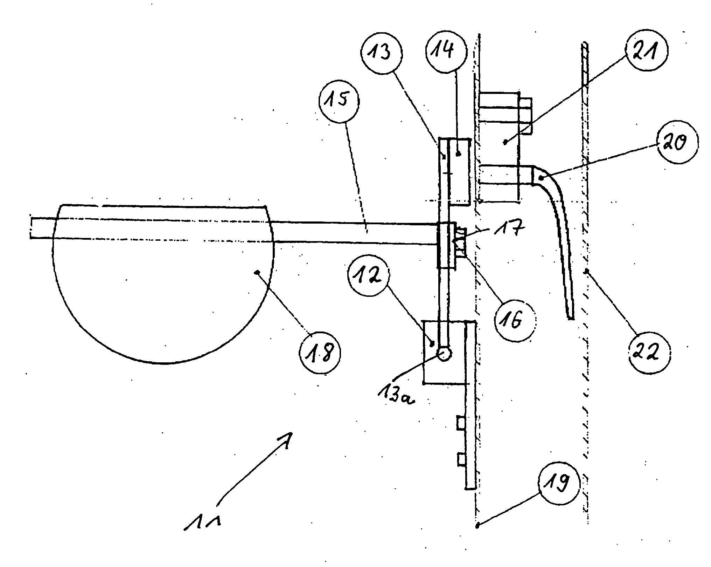

Oberhalb der Pumpe 9 und der Heizung 10 befindet sich eine Wasserstandserfassungeinrichtung 11, die nachfolgend mit Bezug auf Figur 2 in näheren Einzelheiten beschrieben wird.

An einem an der Innenwand des Gehäuses des Waschgeräts 1 bzw. des Wassertanks 6 befestigten Lager 12, das mit Befestigungslaschen versehen ist, ist ein starrer Magnetarm 13 um eine horizontale Welle 13a schwenkbar gelagert, an dessen freiem Ende ein Permanentmagnet 14 befestigt ist, der in Richtung der Wand weist. Im rechten Winkel zu dem Magnetarm 13 ist ein Schwimmerarm 15 an dem Magnetarm 13 befestigt. Der Schwimmerarm 15 hat zum Zwecke der Befestigung an seinem freien Ende ein Schubstück 16 mit einer Stellschraube 17, mit der der Schwimmerarm 15 an ausgewählter Position des Magnetarms 13 befestigbar ist.

Der Schwimmerarm 15 trägt an seinem freien Endabschnitt einen Schwimmer 18, der die Form eines hohlen Kugelabschnitts hat, der im wesentlichen unterhalb des Schwimmerarms 15 angeordnet ist.

An der Außenseite der Tankwandung 19 ist ein Reedschalter 20 angeordnet, der mittels einer Aufnahme 21 an der Wand gehalten ist. Der Bereich, in dem der Reedschalter 20 angeordnet ist, ist von einer abnehmbaren Abdeckung 22 überdeckt.

Wenn der Wasserspiegel in dem Tank 6 über dem vorgegebenen Mindestniveau liegt - oder, bei umgekehrter Anordnung mit nach unten gerichteten Magnetarm, unter dem vorgegebenen Höchstniveau -, drückt der Schwimmerarm 15 durch den Auftrieb des Schwimmers 18 den Permanentmagneten 14 an die Wand 10, wobei in diesem Zustand die Pumpe 9 und die Heizeinrichtung 10 in Betrieb sind. Wenn das Flüssigkeitsniveau sinkt, bzw. bei umgekehrter Anordnung steigt, wird der Magnetarm 13 mit dem Permanentmagneten 14 von der Wand 19 weg verschwenkt, und der Reedschalter 20 führt bei einem Abstand des Permanentmagneten 14 von der Wand 19 von ca. 10 bis 20 mm den gewünschten Schaltvorgang aus, mit dem die Pumpe 9 und die Heizeinrichtung 10 ausgeschaltet werden.

Wenn es erforderlich sein sollte, den Reedschalter 20 auszutauschen, ist dies mit einigen wenigen Handgriffen von der Außenseite des Gerätes 1 aus möglich. Die besondere Wasserstandserfassungseinrichtung erfordert praktisch keinerlei Eingriff in das Innere des Gerätes. Außerdem ist sie mit geringen Herstellungskosten verbunden.

## Patentansprüche

1. Gerät (1) zum Reinigen von Gegenständen wie Maschinenteilen oder dergleichen, mit einem Wasserbehälter (6) und mit wenigstens einer Wasserstandserfassungseinrichtung (11) die innerhalb des Gerätes einen mit einem Schwimme (18) gekoppelten Permanentmagneten (14) aufweist und einen auf den Permanentmagneten ansprechenden Schalter (20) at,
**dadurch gekennzeichnet,**
**daß** der Schalter (20) an einer Außenwand des Gerätes angeordnet ist, wobei zumindest der Wandbereich zwischen dem Permanentmagneten und dem Schalter aus einem nicht-magnetischen Material besteht, und
**daß** der Schwimmer (18) an einem starren Schwimmerarm (15) befestigt ist, der an ausgewählter Position an einem starren, schwenkbar gelagerten Magnetarm (13) befestigbar ist, an dem der Permanentmagnet (14) befestigt ist.

2. Gerät nach Anspruch 1
wobei das Gerät ferner eine Heizeinrichtung (10) und eine Pumpe (9) aufweist, die Wasser aus dem Wasserbehälter (6) fördert und auf die zu reinigenden Gegenstände richtet, wobei das Wasser durch eine Filtereinrichtung (7) in den Wasserbehälter (6) zurückläuft.

3. Gerät nach Anspruch 2
wobei die Filtereinrichtung (7) ein Lochblech ist.

4. Gerät nach Anspruch 1
wobei der Schalter (20) ein Reedschalter ist.

5. Gerät nach einem der Ansprüche 1 bis 4
wobei eine Wasserstandserfassungseinrichtung (11) an einer Wand des Wasserbehälters (6) angeordnet ist.

6. Gerät nach einem der Ansprüche 1 bis 5
wobei
eine Wasserstandserfassungseinrichtung (11) an einer Wand des Gerätes (1) oberhalb der Filtereinrichtung (7) angeordnet ist.

7. Gerät nach einem der Ansprüche 1 bis 6
wobei der Magnetarm (13) schwenkbar an einer an einer Wand angebrachten Halterung (12) gelagert ist.

8. Gerät nach Anspruch 1
wobei der Schwimmerarm (15) an seinem Ende ein Schubstück (16) hat, das mittels einer Stellschraube (17) an ausgewählter Position an dem Magnetarm (13) befestigbar ist.

## Claims

1. A device (1) for cleaning of objects such as machine parts or the like, with a water container (6) and at least one water level detection device (11), which has a permanent magnet (14) coupled with a float (18) within the device, and which has a switch (20) responding to the permanent magnet,
**characterised in that**
the switch (20) is located on one of the outside walls of the device, where at least the wall area between the permanent magnet and the switch is composed of a non-magnetic material, and that the float (18) is attached to a rigid float arm (15) that can be attached at a selected position on a rigid magnet arm (13), mounted so as to pivot, to which the permanent magnet (14) is attached.

2. A device according to claim 1,
where
the device also has a heating device (10) and a pump (9) that feeds the water out of the water container (6) and directs it onto the objects to be cleaned, whereby the water runs back through the filter device (7) into the water container (6).

3. A device according to claim 2,
where
the filter device (7) is a perforated plate.

4. A device according to claim 1,
where
the switch (20) is a reed switch.

5. A device according to one of claims 1 through 4,
where
a water-level detection device (11) is arranged on a wall of the water container (6).

6. A device according to one of claims 1 through 5,
where
a water-level detection device (11) is arranged on a wall of the device (1) above the filter device (7).

7. A device according to one of claims 1 through 6,
where
the magnet arm (13) can pivot on a support (12) attached to one of the walls.

8. A device according to claim 1,
where
the float arm (15) has at is end a slide piece (16) that can be attached by means of a set screw (17) at a selected position on the magnet arm (13).

## Revendications

1. Dispositif (1) pour nettoyer des objets, comme des pièces de machine ou similaire, avec un réservoir d'eau (6) et avec au moins une installation de détection de niveau d'eau (11) qui présente à l'intérieur de l'appareil un aimant permanent (14) couplé à un flotteur (18) et présente un commutateur (20) réagissant à l'aimant permanent, **caractérisé en ce que** le commutateur (20) est disposé à une paroi extérieure de l'appareil, où au moins la zone de paroi entre l'aimant permanent et le commutateur est constituée d'un matériau non magnétique, et **en ce que** le flotteur (18) est fixé à un bras de flotteur rigide (15) qui, dans une position sélectionnée, peut être fixé à un bras d'aimant rigide (13) logé d'une manière pivotante auquel est fixé l'aimant permanent (14).

2. Dispositif selon la revendication 1, où le dispositif présente en outre une installation de chauffage (10) et une pompe (9) qui convoie l'eau du réservoir d'eau (6) et la dirige sur les objets à nettoyer, où l'eau reflue à travers une installation de filtration (7) dans le réservoir d'eau (6).

3. Appareil selon la revendication 2, où l'installation de filtration (7) est une tôle perforée.

4. Appareil selon la revendication 1, où le commutateur (20) est un commutateur reed.

5. Appareil selon l'une des revendications 1 à 4, où une installation de détection de niveau d'eau (11) est disposée à une paroi du réservoir d'eau (6).

6. Appareil selon l'une des revendications 1 à 5, où une installation de détection de niveau d'eau (11) est disposée à une paroi de l'appareil (11) au-dessus de l'installation de filtration (7).

7. Appareil selon l'une des revendications 1 à 6, où le bras magnétique (13) est logé d'une manière pivotante à un support (12) monté sur une paroi.

8. Appareil selon la revendication 1, où le bras de flotteur (15) présente à son extrémité une pièce de poussée (16) qui peut être fixée par une vis de positionnement (17) à une position sélectionnée au bras magnétique (13).
